# FASCICULE DE BREVET EUROPEEN

(11) **EP 1 122 467 B1**
(45) Date de publication et mention de la délivrance du brevet: **08.09.2004**
(21) Numéro de dépôt: 01400306.5
(22) Date de dépôt: 07.02.2001
(51) Int. Cl.: F16H 61/02

(54) **Procédé de pilotage des changements de rapports d'une boîte de vitesses automatique**
Verfahren zur Steuerung des Gangschaltmodus eines Automatikgetriebes
Methode for controlling gear changing mode for automatic gearboxes

(30) Priorité: 07.02.2000 FR 0001494
(43) Date de publication de la demande: 08.08.2001
(73) Titulaire: Renault s.a.s., 92100 Boulogne Billancourt (FR)
(72) Inventeur: Fauvel, François, 60129 Gilocourt (FR); Ho, Pascal, 78140 Velizy (FR); Dayre, Eric, 38540 Saint Just Chaleyssin (FR)

(56) Documents cités:
- EP-A- 0 911 551
- DE-A- 4 337 163
- FR-A- 2 699 978
- US-A- 5 089 963
- US-A- 5 157 609
- US-A- 5 545 108
- US-A- 5 587 905

## Description

L'invention concerne un procédé de pilotage des changements de rapports de transmission d'une boite de vitesses automatique pour un véhicule automobile.

L'invention concerne plus particulièrement un procédé de pilotage des changements de rapports de transmission qui détermine, en mode de pilotage automatique, le rapport de démultiplication à partir d'une loi de commande et qui prend en compte la sélection volontaire manuelle d'un rapport de transmission par le conducteur du véhicule.

Il existe déjà dans l'état de la technique plusieurs boites de vitesses qui utilisent des procédés qui permettent de déterminer, en mode de pilotage automatique, le rapport de démultiplication de la transmission à partir d'une loi de commande et qui prennent en compte, en mode de pilotage manuel, la sélection manuelle d'un rapport de transmission, par le conducteur du véhicule.

Il existe des boîtes des vitesses dont la commutation entre les modes de pilotage automatique et manuel se fait manuellement par l'intermédiaire d'un sélecteur ou d'un levier de vitesses. Certaines boîtes de vitesses proposent le basculement du mode de pilotage automatique vers le mode de pilotage manuel par détection d'une action du conducteur sur la commande de "montée" ou de "descente" du rapport. Pour réactiver le mode de pilotage automatique il est nécessaire d'actionner le sélecteur. Le fonctionnement d'une telle boite de vitesses ne permet pas au procédé de pilotage de changement de rapports en mode de pilotage automatique de prendre en compte les interventions manuelles du conducteur. Les pilotages en modes automatique et manuel sont distincts.

La demande de brevet européen EP-A-0.531.567 propose un mode de pilotage "adaptatif" avec un pilotage manuel qui permet d'adapter la stratégie de changement automatique de rapports au style de conduite d'un conducteur donné. L'adaptation du mode de pilotage automatique n'est réalisée que lorsque le mode de pilotage "adaptatif" est activé.

La demande de brevet français FR-A-2.767.571 propose un système dans lequel la commutation du mode de pilotage manuel vers le mode de pilotage automatique peut être décidé par un système de supervision dans des situations de conduite spécifiques, notamment pour des raisons de sécurité ou lorsque aucune intervention manuelle n'a été détectée par le système de supervision pendant une période prédéterminée. Cependant, ce système ne permet pas de commutation automatique du mode de pilotage manuel vers le mode de pilotage automatique dans toutes les situations. De plus, lorsque le système fonctionne en mode de pilotage manuel, il ne permet pas d'adapter la stratégie de changement de rapports de démultiplication du mode de pilotage automatique.

L'invention a pour but de remédier à ces inconvénients. Plus précisément, le procédé de pilotage, conformément aux enseignements de l'invention, permet une prise en compte d'une intervention volontaire et manuelle du conducteur, par un système électronique de supervision, sans nécessiter le basculement dans un mode de pilotage exclusivement manuel. Lorsque le mode de pilotage manuel est activé temporairement et automatiquement, le système de supervision permet le basculement automatique vers le mode de pilotage automatique dans certaines conditions. L'invention permet au système électronique de supervision d'adapter instantanément le rapport de transmission de la boîte de vitesses automatique à la demande du conducteur.

Un autre but de l'invention est d'analyser les causes de l'intervention du conducteur et ainsi, dans certains cas, de prendre en compte l'intervention manuelle du conducteur pour adapter la détermination du rapport de transmission en mode de pilotage automatique. Le procédé de pilotage permet une complémentarité entre les prestations d'apprentissage et d'auto-adaptivité du système électronique de supervision.

Dans cet objectif l'invention propose un procédé de pilotage des changements de rapports de transmission d'une boîte de vitesses automatique pour véhicule automobile, qui comporte les étapes suivantes :
- détermination par un système électronique de supervision, d'une information représentative du rapport de transmission demandée par une loi de commande qui prend en compte des grandeurs intermédiaires telles que des grandeurs représentatives des conditions d'environnement et des caractéristiques propres au conducteur et à sa conduite, stockées et fournies par un sous-module environnement de conduite, par un sous-module "personnalité conducteur" et par un sous-ensemble "style de conduite" respectivement ;
- détection et prise en compte de façon prioritaire d'une intervention du conducteur consistant en la sélection volontaire manuelle d'un rapport de transmission différent de celui déterminé par le système électronique de supervision.

Ce procédé est caractérisé en ce que si le rapport sélectionné par le conducteur est compatible avec la loi de commande, le changement de rapport est exécuté et le système reste en mode automatique et en ce que
si le système de pilotage détermine que le rapport sélectionné est incompatible avec la loi de commande, le changement de rapport est exécuté et la détermination du rapport de transmission bascule automatiquement et temporairement du mode automatique vers un mode manuel, jusqu'à ce que le basculement inverse intervienne, lorsque le rapport selectionné volontairement par le conducteur devient compatible avec la loi de commande.

Selon d'autres caractéristiques de l'invention :
- le basculement du mode de pilotage manuel vers le mode de pilotage automatique est réalisé lorsque l'information représentative du rapport déterminé par le système électronique de supervision est modifiée suite à l'évolution de grandeurs intermédiaires et lorsqu'elle devient compatible avec le rapport sélectionné manuellement par le conducteur ;
- le basculement du mode de pilotage manuel vers le mode de pilotage automatique est réalisé lorsqu'une nouvelle intervention du conducteur sélectionne un rapport de transmission compatible avec l'information représentative du rapport déterminée par le système électronique de supervision ;
- le basculement du mode de pilotage manuel vers le mode de pilotage automatique est réalisé lorsqu'un commutateur de mode automatique/manuel est actionné par le conducteur du véhicule ;
- un module de diagnostic qui permet d'identifier la cause d'une intervention du conducteur est activé lors de l'intervention du conducteur de façon à déterminer si la situation qui suit l'intervention du conducteur est prévisible par le système électronique de supervision ;
- le système électronique de supervision prend en compte l'intervention du conducteur à long terme en modifiant et en stockant la valeur d'au moins une grandeur intermédiaire du module "personnalité conducteur" ;
- le système électronique de supervision prend en compte l'intervention du conducteur à court ou moyen terme en modifiant la valeur d'au moins une grandeur intermédiaire qui est représentative de la conduite du conducteur ;
- l'une des grandeurs intermédiaires est représentative de la demande de performances ;
- l'une des grandeurs intermédiaires est représentative de la demande de frein moteur.

D'autres caractéristiques et avantages de l'invention apparaîtront à la lecture de description détaillée qui suit pour la compréhension de laquelle on se reportera aux dessins annexés parmi lesquels :
- la figure 1 représente schématiquement la structure du système de pilotage pour la mise en oeuvre du procédé de pilotage selon l'invention ;
- la figure 2 est un diagramme illustrant différentes étapes du procédé de pilotage selon l'invention.

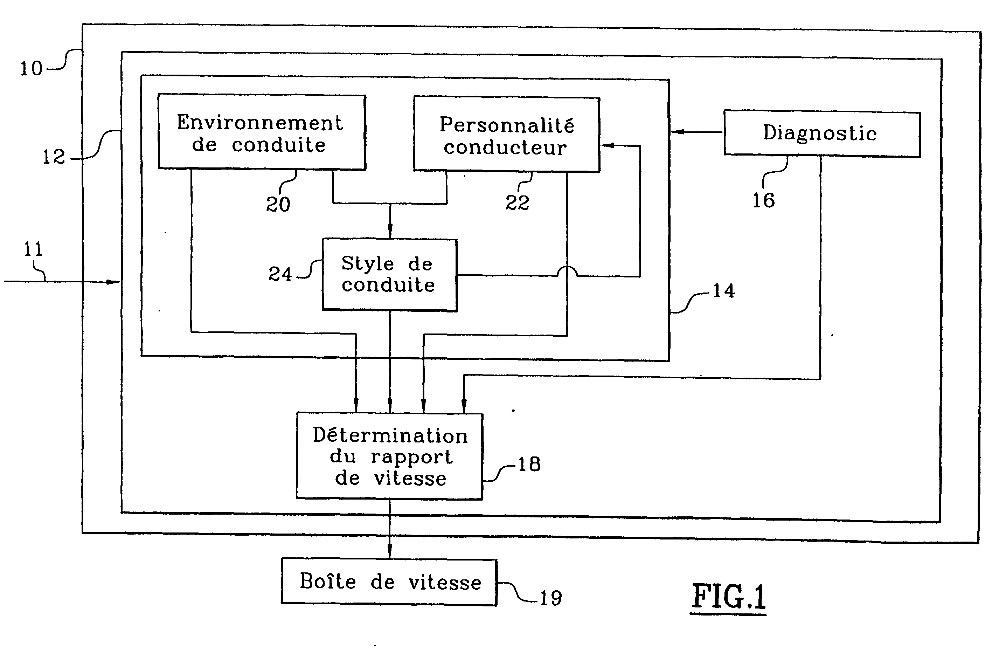

La figure 1 représente un système de pilotage 10 ou contrôleur de transmission, qui est chargé de déterminer, à chaque instant, le rapport de démultiplication à engager.

Le système de pilotage 10 détermine en temps réel une consigne de rapport à partir d'informations provenant de capteurs 11 tels que des capteurs de vitesse, d'accélération, de position, équipant le véhicule, et ceci par le biais de traitements informatiques qui mettent en oeuvre, par exemple, la technique dite de logique floue.

Le système de pilotage 10 comporte notamment un système électronique de supervision 12 constitué d'un module 14 de détermination de la situation de conduite, d'un module 16 de diagnostic et d'un module 18 de détermination du rapport dans lequel est implantée au moins une loi de détermination des rapports qui permet de traiter des informations, notamment les informations provenant des capteurs 11 situés sur le véhicule.

Les capteurs 11 fournissent notamment des informations représentatives de la position de la pédale de l'accélérateur, de la pression de freinage, de l'accélération longitudinale et transversale du véhicule, de la vitesse du véhicule, du régime moteur, et de l'actionnement de dispositifs tels qu'un levier de changement de vitesses.

Le module de détermination de la situation de conduite 14 comporte trois sous-modules.

Le premier sous-module 20 est appelé "environnement de conduite". Il permet de traiter des informations qui proviennent des capteurs 11 pour fournir des grandeurs intermédiaires dont les valeurs sont représentatives des conditions d'environnement, par exemple de la masse du véhicule, de la pente de la route, de l'effort résistant, du type de route, des conditions de circulation, etc.

Le second sous-module 22, appelé "personnalité conducteur", permet de traiter des informations qui proviennent des capteurs 11 pour fournir des grandeurs intermédiaires dont les valeurs sont représentatives des caractéristiques propres au conducteur, notamment de l'appréciation du frein moteur et de la performance du moteur. Ce sous-module "personnalité conducteur" 22 caractérise le conducteur à long terme. Ces grandeurs intermédiaires sont globales, relativement durables, et liées à la personne du conducteur, à son trait de caractère et à sa façon de conduire en général.

Le sous-module 22 "personnalité conducteur" permet d'identifier le conducteur. Cette identification peut se faire par reconnaissance de l'identité d'un conducteur ayant précédemment utilisé le véhicule par détection d'actions analogues sur des organes tels que le levier de changement de vitesses, une pédale de frein ou d'accélérateur. L'identification peut aussi être réalisée par l'utilisation d'une carte à mémoire qui contient les grandeurs intermédiaires caractérisant le conducteur et qui peut être insérée par ce conducteur dans un dispositif (non représenté) avant le démarrage du moteur du véhicule.

Le troisième sous-module 24, appelé "style de conduite", permet de traiter des informations qui proviennent des capteurs 11 ainsi que les grandeurs intermédiaires fournies par les premier 20 et second 22 sous-modules pour fournir des grandeurs intermédiaires caractérisant la conduite du conducteur à court terme. Ces grandeurs intermédiaires sont calculées, par exemple, par inférence floue, à partir d'informations représentatives par exemple de l'action sur les pédales de frein et d'accélérateur. Les grandeurs intermédiaires fournies par le sous-module 24 "style de conduite" peuvent prendre toute valeur comprise entre des valeurs extrêmes 0 et 1. L'une de ces valeurs peut être représentative d'une conduite calme ou d'une conduite sportive, respectivement. D'autres grandeurs intermédiaires peuvent représenter la demande en frein moteur ou la demande de performance, c'est-à-dire la demande de puissance du moteur par le conducteur du véhicule.

Ces trois premiers sous-modules 20, 22, 24 permettent d'identifier la situation de conduite. En effet, ils contiennent la quasi-totalité des grandeurs permettant au système de pilotage de déterminer le rapport de transmission de la boîte de vitesses automatique.

Le module 16 de diagnostic, en mode de pilotage automatique, permet, à partir des informations provenant des capteurs 11 d'identifier des situations de conduites telles qu'une forte accélération, ou un virage, et de fournir des grandeurs intermédiaires représentatives du mode de fonctionnement. On peut par exemple identifier trois modes de fonctionnement.

Le mode "normal" qui est adapté à une situation de conduite identifiée par le système de pilotage 10 et qui ne requiert pas de frein moteur.

Le mode "frein moteur" qui est adapté à une situation de descente dans laquelle le conducteur souhaite un effet de frein moteur, ou à une phase de décélération.

Le mode "rapport bloqué" qui est adapté à des situations spécifiques telles que des situations de lever de pied rapide d'une pédale de commande, de décélération avec l'accélérateur non relâché, de virage. Dans ces situations, mais aussi lorsqu'il est difficile d'identifier précisément la situation ou l'intention du conducteur, on estime qu'il ne faut ni passer de rapport supérieur, ni engager de stratégie de rétrogradage active de type "frein moteur". Le mode "rapport bloqué" est aussi adapté à une situation intermédiaire entre le mode "normal" et le mode "frein moteur".

Le choix du mode de fonctionnement est réalisé, par exemple par une table de règles floues, dont les entrées peuvent être la position de la pédale de l'accélérateur, sa dérivée, l'accélération longitudinale, l'accélération transversale du véhicule, le temps écoulé depuis que l'accélérateur est complètement relevé, le temps écoulé depuis un lever de pied, le temps écoulé depuis que l'accélérateur est enfoncé.

Le module 16 permet également de déterminer les causes des interventions manuelles du conducteur

Le module 18 de détermination du rapport dans lequel est implantée la loi de détermination du rapport permet, à partir des grandeurs intermédiaires issues du module 14 de détermination de la situation de conduite ainsi que des informations qui proviennent des capteurs 11, de déterminer une information représentative du rapport de transmission de la boîte de vitesses automatique du véhicule automobile. L'information représentative du rapport est transmise à une boîte de vitesses 19.

La prise en compte supplémentaire des grandeurs intermédiaires issues du module 16 de diagnostic par le module 18 de détermination du rapport, ainsi que par le module 14 de détermination de la situation de conduite, rend le système électronique de supervision 12 auto-adaptatif au conducteur et à l'environnement. La loi de détermination du rapport peut être constituée de lois de passage de type cartographique, associées à des stratégies de modification du rapport déterminé par les lois de passage. Elle peut alternativement être réalisée par un procédé d'évaluation multicritères floue. D'autres structures de loi de sélection du rapport sont possibles.

Le fonctionnement du procédé de pilotage réalisé conformément aux enseignements de l'invention est le suivant.

Lors de l'utilisation d'un véhicule automobile équipé d'une boîte de vitesses automatique dont les changements de rapports sont déterminés par un procédé de pilotage réalisé selon l'invention, le système de pilotage 10 détermine automatiquement le rapport de démultiplication à engager.

Le procédé de pilotage selon invention permet au conducteur du véhicule d'intervenir volontairement et manuellement à tout moment sur la détermination du rapport de transmission, par exemple par une action sur des commandes impulsionnelles qui permettent de monter ou de descendre d'un rapport. Dans un premier temps, cela permet au conducteur de modifier le rapport de transmission de la boîte automatique qui ne le satisfait pas. Dans un second temps, le système de pilotage 10 modifie progressivement la détermination du rapport en mode de pilotage automatique, de façon à s'adapter précisément aux attentes du conducteur. Cela permet par la suite de réduire les interventions manuelles du conducteur et ainsi d'améliorer l'agrément de conduite.

L'intervention volontaire et manuelle du conducteur résulte de son insatisfaction du rapport déterminé par le module 18 de détermination du rapport. L'insatisfaction du conducteur peut avoir plusieurs causes :
- le sous-module 24 "style de conduite" ne fournit pas des grandeurs intermédiaires adaptées pour représenter les attentes du conducteur. En particulier, il ne traduit pas suffisamment les différences existantes entre plusieurs conducteurs ;
- le sous-module 24 "style de conduite" fournit des grandeurs intermédiaires adaptées, cependant la loi de commande du module 18 de détermination du rapport ne permet pas d'obtenir le rapport attendu par le conducteur ;
- le sous-module 24 "style de conduite" fournit des grandeurs intermédiaires adaptées, la loi de commande permet dans la majorité des cas de fournir le rapport attendu par le conducteur, mais le véhicule se trouve dans une situation spécifique qui est reconnue par le système de pilotage 10, telle qu'un lever de pied rapide entraînant le mode "rapport bloqué", pour laquelle la détermination du rapport ne satisfait pas le conducteur ;
- le sous-module 24 "style de conduite" fournit des grandeurs intermédiaires adaptées, la loi de commande permet dans la majorité des cas de fournir le rapport attendu par le conducteur, mais le véhicule se trouve dans une situation spécifique qui n'est pas reconnue ou qui est mal reconnue par le système de pilotage 10, telle qu'une situation de manoeuvre ou d'anticipation de conditions de roulage particulières comme un rétrogradage avant une manoeuvre de dépassement, pour laquelle la détermination du rapport ne satisfait pas le conducteur.

Le procédé de pilotage proposé par l'invention permet de prendre en compte judicieusement les interventions volontaires du conducteur dans ces différents cas.

La prise en compte des interventions du conducteur se traduit d'une part par une modification immédiate du rapport de transmission et, d'autre part par la modification dans certains cas des grandeurs intermédiaires fournies par le module 14 de détermination de la situation conduite et/ou par le module 18 de détermination du rapport.

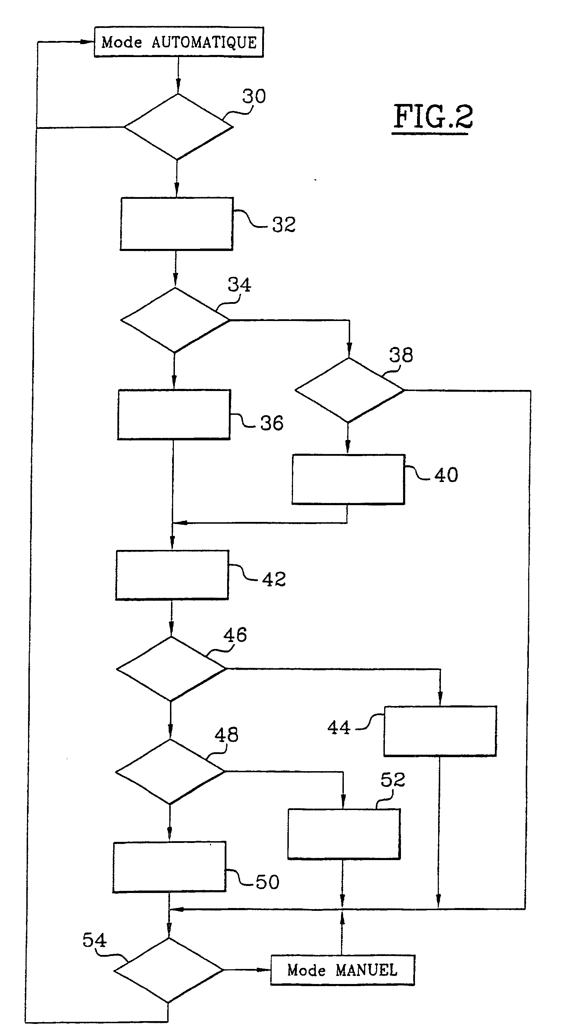

La figure 2 est un diagramme illustrant le procédé de pilotage selon l'invention qui permet ou non la prise en compte des interventions volontaires et manuelles du conducteur du véhicule.

Lors d'une intervention volontaire et manuelle 30 du conducteur sur les commandes impulsionnelles de changement de rapport, le rapport de transmission est immédiatement modifié lors d'une étape 32.

Le procédé selon invention permet d'utiliser les interventions du conducteur sur les commandes impulsionnelles pour adapter la détermination du rapport aux attentes du conducteur lorsque cela est avantageux.

Cette adaptation a lieu selon deux échelles de temps et avec deux résultats différents. D'une part, on agit sur le sous-module 24 "style de conduite". Cette action intervient très rapidement, et son effet perdure pendant quelques minutes au maximum, c'est une adaptation temporaire aux interventions du conducteur. D'autre part, on agit progressivement sur le sous-module 22 "personnalité conducteur". Cela permet d'adapter progressivement (un peu suite à chaque intervention du conducteur), mais de façon durable, la détermination de l'information représentative du rapport du module 18 de détermination du rapport. C'est ainsi une adaptation à long terme aux interventions du conducteur qui est réalisée et qui constitue une forme d'apprentissage de ses habitudes de conduite.

Suite à chaque intervention volontaire et manuelle 30 du conducteur sur les commandes impulsionnelles, on agit sur le sous-module 24 "style de conduite" qui fournit des grandeurs intermédiaires.

En première approche, on considère deux grandeurs intermédiaires fournies par le module 24 "style de conduite" qui sont la demande de performances et la demande de frein moteur.

Dans le cas d'une situation de ralentissement, le mode de fonctionnement du moteur est le mode "frein moteur" 34. Un rétrogradage anticipé par le conducteur est interprété comme la demande de davantage de puissance de retenue et il est traduit par une étape 36 qui permet l'adaptation, ici une augmentation, de la valeur de la grandeur intermédiaire "demande de frein moteur", qui permet, lors du ou des rétrogradages suivants, de disposer de plus de frein moteur et d'éviter ainsi au conducteur une gêne ou de nécessiter une intervention manuelle de sa part.

Pour cela, on ajoute une valeur calibrée, qui peut varier en fonction de la valeur de la grandeur intermédiaire, et de la différence entre le point de changement de rapports sélectionné par le conducteur et le point qu'aurait choisi le module 18 de détermination du rapport.

Par contre, si le conducteur demande une montée de rapport en situation de frein moteur, l'étape 36 diminue la valeur de la grandeur intermédiaire demande de frein moteur.

Si le rapport sélectionné par le conducteur est inférieur au rapport déterminé par le module 18 de détermination du rapport, et le mode de fonctionnement du moteur est le mode "normal" 38, le procédé de pilotage considère alors que le conducteur souhaite disposer de plus de puissance et que, par conséquent, il convient d'adapter, ici d'augmenter, la valeur de la grandeur intermédiaire "demande de performance" par une étape 40. De façon similaire à l'étape 38, une valeur calibrée est ajoutée à la grandeur intermédiaire. Inversement, si le rapport sélectionné est supérieur au rapport déterminé, on diminue la valeur de la grandeur intermédiaire demande de performances.

Ces adaptations des grandeurs intermédiaires reviennent à prendre en compte les commandes impulsionnelles comme des entrées supplémentaires du sous-module 24 "style de conduite". Leur effet sur le rapport déterminé par le module 18 de détermination du rapport est immédiat. Dans tous les cas, cette modification, si elle est validée, va dans le sens d'un fonctionnement plus dynamique (ou respectivement, moins dynamique) dont l'effet se fait sentir sur la détermination du rapport en mode de pilotage automatique pendant une durée qui dépend de la dynamique d'évolution des grandeurs intermédiaires fournies par le sous-module 24 "style de conduite", et qui est comprise entre quelques dizaines de secondes et quelques minutes. En effet, les grandeurs intermédiaires fournies par le sous-module 24 évoluent en permanence sous l'effet d'autres informations opérationnelles.

Cependant, il n'est pas toujours souhaitable de modifier la détermination de rapport en mode automatique à la suite d'une intervention du conducteur

Si l'intervention volontaire manuelle du conducteur est due à une anticipation d'une situation impossible à prévoir par le module 16 de diagnostic, il ne faut pas adapter les grandeurs intermédiaires.

Si cette intervention apparaît dans le cadre d'une situation spécifique qui est diagnostiquée et traitée par le module 16 de diagnostic, il peut être utile d'adapter les grandeurs intermédiaires. En effet, la qualité de la gestion des situations spécifiques est très importante pour l'agrément de conduite du conducteur. Cependant, il est parfois très délicat de déterminer la grandeur intermédiaire qu'il convient de modifier pour améliorer la perception de la prestation globale, par le conducteur. Par conséquent, il est préférable de ne pas adapter la détermination du rapport dans ces situations, considérant que le risque d'une adaptation erronée est plus grand que l'avantage apporté par une adaptation adéquate.

Ainsi, lorsqu'une intervention manuelle du conducteur se produit, le module 16 de diagnostic qui permet notamment d'analyser et d'identifier la cause de l'intervention est activé lors d'une étape 42.

Lorsque, par exemple, quelques instants après une intervention manuelle du conducteur pour rétrograder un rapport, le module 16 de diagnostic identifie un passage en mode de fonctionnement "frein moteur", il en déduit que l'intervention du conducteur correspond à une anticipation du rétrogradage pour ralentir le véhicule. Dans ce cas, l'adaptation de la détermination du rapport en mode automatique n'est pas validée.

Dans ce cas, l'adaptation des grandeurs intermédiaires du sous-module 24 "style de conduite" est annulée lors d'une étape 44.

Le procédé de pilotage valide l'adaptation de la détermination du rapport, par l'étape 46, dans des situations telles que le rétrogradage en situation de demande de frein moteur diagnostiquée par le système de pilotage 10, le conducteur souhaitant alors plus de frein moteur que ce que propose le rapport déterminé par le module 18 de détermination du rapport, le rétrogradage en mode de fonctionnement "normal" sans blocage de rapport, le conducteur souhaitant alors plus de puissance, le passage du rapport supérieur en mode de fonctionnement "frein moteur" établi, le conducteur voulant alors moins de frein moteur, et le passage du rapport supérieur en mode de fonctionnement "normal", le conducteur voulant alors un fonctionnement moins dynamique.

Lorsque l'adaptation des grandeurs intermédiaires du sous-module 24 "style de conduite" est validé par l'étape 46, les grandeurs intermédiaires du sous-module 22 "personnalité conducteur" peuvent être adaptées.

L'invention propose par exemple d'utiliser les valeurs moyennes glissantes sur de grands intervalles de temps des grandeurs intermédiaires fournies par le sous-module 24 "style de conduite" comme entrées du sous-module 22 "personnalité conducteur". Les interventions manuelles sur les commandes impulsionnelles peuvent aussi être prises en compte pour adapter les grandeurs intermédiaires fournies par le sous-module 22 "personnalité conducteur".

L'adaptation des grandeurs intermédiaires du sous-module 22 "personnalité conducteur" lors d'une intervention manuelle du conducteur sur les commandes impulsionnelles est analogue dans son principe à celle réalisée sur les grandeurs intermédiaires fournies par le sous-module 24 "style de conduite". Elle consiste à ajouter ou à retrancher des valeurs calibrées aux valeurs des grandeurs intermédiaires, lorsque le module 16 de diagnostic a défini s'il fallait prendre en compte l'intervention manuelle, et lorsque le système 10 a déterminé sur quelles grandeurs intermédiaires les adaptations devaient porter.

Conformément à la figure 2, lorsque l'adaptation des grandeurs intermédiaires du sous-module 24 "style de conduite" est validée, une étape 48 du procédé détermine si le mode de fonctionnement est le mode "frein moteur". Dans ce cas les grandeurs intermédiaires représentatives de l'appréciation du frein moteur sont modifiées par une étape 50. Si ce n'est pas le mode "frein moteur", ce sont les grandeurs intermédiaires représentatives des performances qui sont modifiées lors d'une étape 52.

Les valeurs des grandeurs intermédiaires adaptées sont stockées dans les modules respectifs.

Ceci permet d'adapter le sous-module 22 "personnalité conducteur" grâce aux interventions volontaires et manuelles, et de converger plus rapidement vers des valeurs de grandeurs intermédiaires qui n'évoluent plus ou peu, ce qui est l'objectif recherché.

De plus, afin d'éviter le passage inverse du rapport en mode de pilotage automatique, ce qui est inacceptable, le système de pilotage 10 détermine lors d'une étape 54 si le rapport demandé par le conducteur est compatible avec la loi de commande en mode de pilotage automatique du module 18 de détermination du rapport, c'est à dire, si un autre rapport est proposé par le module 18 de détermination du rapport, une fois que le rapport sélectionné manuellement par le conducteur est engagé.

Il est en effet nécessaire d'éviter une telle oscillation de rapport, appelée "pompage", qui dégrade fortement l'agrément de conduite.

Si le rapport sélectionné par le conducteur est compatible avec la loi de commande, le changement de rapports est exécuté et le système reste en mode automatique.

Si le système de pilotage détermine que le rapport sélectionné est incompatible avec l'information représentative du rapport déterminée par le système électronique de supervision 12, la détermination du rapport de transmission bascule automatiquement et temporairement du mode automatique vers un mode manuel. Un dispositif de visualisation permet alors de signaler au conducteur que la détermination des rapports est obtenue par le mode de pilotage manuel, il peut aussi signaler au conducteur le rapport engagé, par exemple par un afficheur situé sur le tableau de bord du véhicule. Dans cette configuration, le rapport de transmission engagé est celui sélectionné par le conducteur tant qu'il reste dans une plage de fonctionnement admissible par le moteur. C'est-à-dire par exemple tant que le régime du moteur est inférieur à une valeur prédéterminée.

Le basculement du mode de pilotage manuel vers le mode de pilotage automatique est réalisé lorsque l'information représentative du rapport déterminé par le système électronique de supervision 12 est modifiée suite à l'évolution de grandeurs intermédiaires, et lorsqu'elle devient compatible avec le rapport sélectionné manuellement par le conducteur.

Cela se produit principalement dans deux cas.

Le premier cas est une évolution de certaines grandeurs intermédiaires ou d'informations d'entrée du module 18 de détermination du rapport, comme par exemple la vitesse du véhicule ou l'enfoncement de la pédale de l'accélérateur, qui entraîne une modification de l'information représentative du rapport proposé par le système de pilotage 10 et qui le rend compatible avec le rapport sélectionné manuellement par le conducteur.

Le second cas se produit lors d'une nouvelle intervention du conducteur sur les commandes impulsionnelles, qui sélectionne un rapport de transmission qui est compatible avec l'information représentative du rapport déterminée par le module 18 de détermination du rapport. Il peut s'agir d'une action inverse de celle précédemment effectuée telle que la montée d'un rapport après un rétrogradage par exemple, lorsque la situation nécessitant le rétrogradage a disparu.

Dans tous les cas, le mode de pilotage de la boîte de vitesse, manuel temporaire ou automatique, est indiqué au conducteur par un signal adapté.

Comme décrit précédemment, le procédé selon invention permet d'adapter la détermination de l'information représentative du rapport fournie par le module 18 de détermination du rapport, lors de l'action par le conducteur sur la commande manuelle impulsionnelle.

Lorsque le mode de fonctionnement "rapport bloqué" est identifié par le module 16 de diagnostic après une intervention volontaire et manuelle du conducteur, aucune adaptation des grandeurs intermédiaires fournies par les sous-modules "personnalité conducteur" 22 et "style de conduite" 24 n'a lieu, le procédé selon invention passe alors directement de l'étape 38 à l'étape 54.

## Revendications

1. Procédé de pilotage des changements de rapports de transmission d'une boîte de vitesses automatique (19) pour véhicule automobile, qui comporte les étapes suivantes :
- détermination par un système électronique de supervision (12), d'une information représentative du rapport de transmission demandé par une loi de commande qui prend en compte des grandeurs intermédiaires telles que des grandeurs représentatives des conditions d'environnement et des caractéristiques propres au conducteur et à sa conduite, stockées et fournies par un sous-module (20) environnement de conduite, par un sous-module (22) "personnalité conducteur" et par un sous-ensemble (24) "style de conduite" respectivement;
- détection et prise en compte de façon prioritaire d'une intervention du conducteur consistant en la sélection volontaire manuelle d'un rapport de transmission différent de celui déterminé par le système électronique de supervision (12) ;
**caractérisé en ce que** si le rapport sélectionné par le conducteur est compatible avec la loi de commande, le changement de rapports est exécuté et le système reste en mode automatique et **en ce que** si le système de pilotage détermine que le rapport sélectionné est incompatible avec la loi de commande, le changement de rapport est exécuté et la détermination du rapport de transmission bascule automatiquement et temporairement du mode automatique vers un mode manuel, jusqu'à ce que le basculement inverse intervienne, lorsque le rapport selectionné volontairement par le conducteur devient compatible avec la loi de commande.

2. Procédé de pilotage selon la revendication précédente, **caractérisé en ce que** le basculement du mode de pilotage manuel vers le mode de pilotage automatique est réalisé lorsque l'information représentative du rapport déterminé par le système électronique de supervision (12) est modifiée suite à l'évolution de grandeurs intermédiaires et lorsqu'elle devient compatible avec le rapport sélectionné manuellement par le conducteur.

3. Procédé de pilotage selon la revendication 1, **caractérisé en ce que** le basculement du mode de pilotage manuel vers le mode de pilotage automatique est réalisé lorsqu'une nouvelle intervention du conducteur sélectionne un rapport de transmission compatible avec l'information représentative du rapport déterminée par le système électronique de supervision (12).

4. Procédé de pilotage selon l'une des revendications précédentes, **caractérisé en ce qu'**un module (16) de diagnostic qui permet d'identifier la cause d'une intervention du conducteur est activé lors de l'intervention du conducteur de façon à déterminer si la situation qui suit l'intervention du conducteur est prévisible par le système électronique de supervision (12).

5. Procédé de pilotage selon la revendication 4, **caractérisé en ce que** le système électronique de supervision (12) prend en compte l'intervention du conducteur à long terme en modifiant et en stockant la valeur d'au moins une grandeur intermédiaire du module (22) "personnalité conducteur".

6. Procédé de pilotage selon la revendication 5, **caractérisé en ce que** le système électronique de supervision (12) prend en compte l'intervention du conducteur à court ou moyen terme en modifiant la valeur d'au moins une grandeur intermédiaire qui est représentative de la conduite du conducteur.

7. Procédé de pilotage selon la revendication 6, **caractérisé en ce que** l'une des grandeurs intermédiaires est représentative de la demande de performances.

8. Procédé de pilotage selon la revendication 7, **caractérisé en ce que** l'une des grandeurs intermédiaires est représentative de la demande de frein moteur.

## Patentansprüche

1. Verfahren zur Steuerung der Wechsel der Übersetzungsverhältnisse eines Automatikgetriebes (19) für Kraftfahrzeuge, das die folgenden Schritte aufweist:
- Bestimmung, durch ein elektronisches Überwachungssystem (12), einer Information, die für das Übersetzungsverhältnis repräsentativ ist, das von einer Steuerregel verlangt wird, die Zwischengrößen berücksichtigt, wie etwa Größen, welche für die Umgebungsbedingungen und die dem Fahrer und seiner Fahrweise eigenen Charakteristiken repräsentativ sind, gespeichert und geliefert durch ein Untermodul (20) Fahrumgebung, durch ein Untermodul (22) "Fahrerpersonalität" bzw. durch eine Untereinheit (24) "Fahrstil";
- Erfassung und Berücksichtigung auf bevorzugte Weise eines Eingriffs des Fahrers, der in der manuellen und gewillkürten Auswahl eines Übersetzungsverhältnisses besteht, das von dem durch das elektronische Überwachungssystem (12) bestimmten verschieden ist,
**dadurch gekennzeichnet, dass**, wenn der durch den Fahrer gewählte Gang mit der Steuerregel kompatibel ist, der Wechsel der Gänge ausgeführt wird und das System im automatischen Modus bleibt, und dadurch, dass, wenn das Steuersystem ermittelt, dass der ausgewählte Gang zu der Steuerregel inkompatibel ist, der Wechsel des Ganges ausgeführt wird und die Bestimmung des Übersetzungsverhältnisses automatisch und temporär vom automatischen in einen manuellen Modus umschaltet, bis ein umgekehrtes Umschalten eintritt, wenn der durch den Fahrer frei gewählte Gang zur Steuerregel kompatibel wird.

2. Verfahren zur Steuerung gemäß dem vorhergehenden Anspruch, **dadurch gekennzeichnet, dass** das Umschalten vom manuellen Steuermodus in den automatischen Steuermodus realisiert wird, wenn die Information, die für den Gang repräsentativ ist, der durch das elektronische Überwachungssystem (12) bestimmt wurde, in Folge einer Fortentwicklung von Zwischengrößen modifiziert wird, und wenn sie zu dem Gang, der durch den Fahrer manuell ausgewählt wurde, kompatibel wird.

3. Verfahren zur Steuerung gemäß Anspruch 1, **dadurch gekennzeichnet, dass** das Umschalten des manuellen Steuermodus in den automatischen Steuermodus realisiert wird, wenn ein neuerlicher Eingriff des Fahrers ein Übersetzungsverhältnis auswählt, das zu der Information kompatibel ist, die für den durch das elektronische Überwachungssystem (12) bestimmten Gang repräsentativ ist.

4. Verfahren zur Steuerung gemäß einem der vorhergehenden Ansprüche, **dadurch gekennzeichnet, dass** ein Diagnosemodul (16), das es ermöglicht, die Ursache eines Eingriffs des Fahrers zu identifizieren, bei einem Eingriff des Fahrers aktiviert wird, um zu bestimmen, ob die Situation, die dem Eingriff des Fahrers folgt, durch das elektronische Überwachungssystem (12) vorhersehbar ist.

5. Verfahren zur Steuerung gemäß Anspruch 4, **dadurch gekennzeichnet, dass** das elektronische Überwachungssystem (12) den Eingriff des Fahrers langfristig berücksichtigt, indem es den Wert von mindestens einer Zwischengröße des Moduls (22) "Fahrerpersonalität" modifiziert und speichert.

6. Verfahren zur Steuerung gemäß Anspruch 5, **dadurch gekennzeichnet, dass** das elektronische Überwachungssystem (12) den Eingriff des Fahrers kurz- oder mittelfristig berücksichtigt, indem es den Wert von mindestens einer Zwischengröße, die für das Verhalten des Fahrers repräsentativ ist, modifiziert.

7. Verfahren zur Steuerung gemäß Anspruch 6, **dadurch gekennzeichnet, dass** eine der Zwischengrößen für die Leistungsanforderung repräsentativ ist.

8. Verfahren zur Steuerung gemäß Anspruch 7, **dadurch gekennzeichnet, dass** eine der Zwischengrößen für die Anforderung an die Motorbremse repräsentativ ist.

## Claims

1. A piloting method for changes of transmission ratios of an automatic gearbox (19) for an automobile vehicle, which comprises the following stages:
- determination by an electronic supervision system (12) of a datum representative of the transmission ratio required by a control law which takes account of intermediate magnitudes such as magnitudes representative of environmental conditions and characteristics specific to the driver and his driving, stored and provided by a driving environment sub-module (20), by a "driver personality" sub-module (22) and by a "driving style" sub-module (24) respectively;
- detection and taking priority account of an action by the driver consisting in the manual and voluntary selection of a transmission ratio different from that determined by the electronic supervision system (12);
**characterised in that** if the ratio selected by the driver is compatible with the control law, the change of ratio is performed and the system remains in automatic mode and **in that** if the piloting system determines that the ratio selected is incompatible with the control law, the change of ratio is performed and the determination of the transmission ratio automatically and temporarily switches from the automatic mode to a manual mode, until the reverse switching takes place when the ratio selected voluntarily by the driver becomes compatible with the control law.

2. A piloting method as claimed in the preceding claim, **characterised in that** switching from the manual driving mode to the automatic driving mode takes place when the datum representative of the ratio determined by the electronic supervision system (12) is modified following the evolution of intermediate magnitudes and when it becomes compatible with the ratio selected manually by the driver.

3. A piloting method as claimed in claim 1, **characterised in that** switching from the manual driving mode to the automatic driving mode takes place when a new action by the driver selects a transmission ratio compatible with the datum representative of the ratio determined by the electronic supervision system (12).

4. A piloting method as claimed in one of the preceding claims, **characterised in that** a diagnostic module (16) which makes it possible to identify the cause of an action by the driver is actuated at the time of the driver's action in order to determine whether the situation following the driver's action can be predicted by the electronic supervision system (12).

5. A piloting method as claimed in claim 4, **characterised in that** the electronic supervision system (12) takes account of the driver's action in the long term by modifying and storing the value of at least one intermediate magnitude of the "driver personality" module (22).

6. A piloting method as claimed in claim 5, **characterised in that** the electronic supervision system (12) takes account of the driver's action in the short or medium term by modifying the value of at least one intermediate magnitude which is representative of the driver's style of driving.

7. A piloting method as claimed in claim 6, **characterised in that** one of the intermediate magnitudes is representative of the performance demand.

8. A piloting method as claimed in claim 7, **characterised in that** one of the intermediate magnitudes is representative of the engine braking demand.
